# EUROPEAN PATENT APPLICATION

(11) **EP 1 956 697 A1**
(43) Date of publication of application: **13.08.2008**
(21) Application number: 06823498.8
(22) Date of filing: 22.11.2006
(51) Int. Cl.: H02K 1/27

(54) **MOTOR FOR INJECTION MOLDING MACHINE, ROTOR OF BURIED MAGNET MOTOR**

(30) Priority: 29.11.2005 JP 2005343718
(71) Applicant: Mitsubishi Heavy Industries Plastic Technology Co., Ltd., Nagoya-shi, Aichi 4530862 (JP)
(72) Inventor: SHINODA, Hisanobu, Nagoya-shi, Aichi, 453-8515 (JP); OHNUMA, Hitoshi, Nagoya-shi, Aichi, 453-8515 (JP)
(74) Representative: Henkel, Feiler & Hänzel
(86) International application number: PCT/JP2006/323271
(87) International publication number: WO 2007/063752

(57) **Abstract**

There are provided a motor for an injection molding machine having excellent durability, and a rotor of a buried magnet motor. In a plate 22 constituting the rotor 20 of a servo motor, a columnar portion 25 formed between adjacent holding holes 24, 24 serves, at a portion between the inner circumferential end 25a and the intermediate portion 25c, as a holding portion 30 coming into line contact with a permanent magnet 23, which is thereby locked even during acceleration/deceleration of the servo motor and prevented from moving. Consequently, the permanent magnet 23 does not butt against a specific part of the columnar portion 25 even during a long term use, and resultantly, the columnar portion 25 is protected against abrasion and fracture and its durability is enhanced sharply. The gap between the holding portion 30 of the columnar portion 25 and the permanent magnet 23 may be filled with a filler such as an electric insulating varnish, an adhesive or a resin to close the gap between the holding portion 30 and the permanent magnet 23. Consequently, the permanent magnet 23 does not move in the holding hole 24 even during acceleration/deceleration of the servo motor and the above-mentioned effect becomes more prominent.

## Description

### Technical Field

The present invention relates to a motor for an injection molding machine and a rotor of a buried magnet motor.

### Background Art

In recent years, attention has been given to buried magnet motors as motors which are compact, yet can produce a large torque. The buried magnet motor is comprised of a rotor having a plurality of permanent magnets placed on the outer circumference and a stator provided opposite to the rotor and having a coil which generates a magnetic field (see, for example, Patent Document 1).

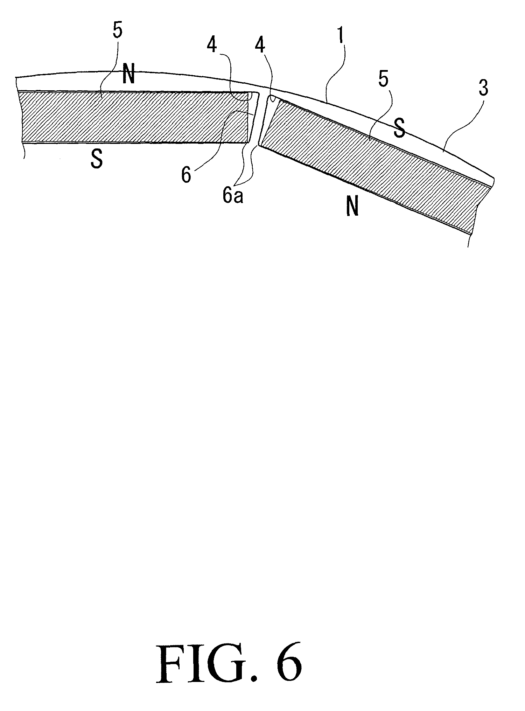

Figure 6 is a view showing the configuration of the rotor 1 of the buried magnet motor. As shown in this figure, the rotor 1 has a configuration in which a large number of disc-like plates 3 are stacked on a shaft and permanent magnets 5 are held in holes 4 formed on the plates 3.
Patent Document 1: Japanese Patent Laid-Open No. 2002-300743

In the configuration of the conventional rotor 1 described above, the hole 4 formed on the plate 3 is situated at the outer circumferential side of the plate 3 wherever possible. The reason for this is that the permanent magnet 5 held by the hole 4 is brought close to the coil of the stator at its outer circumferential side so that the action by magnetic fields of the magnet and the coil is made efficient.

Furthermore, a columnar portion 6 is formed between the holes 4, 4 in the circumferential direction of the plate 3, and in a motor with big fluctuations in generated torque during actuation of the motor, the permanent magnet 5 is caused to move by the inertial force during acceleration/deceleration of the rotor 1 and likely butts particularly against the inner circumferential end 6a. Consequently, in some cases, the columnar portion 6 fractures at the end 6a during a long term use.

When the hole 4 in the plate 3 is expanded at the outer circumferential side by a centrifugal force exerted on the permanent magnet 5 with the rotation of the rotor 1, or the like, and the stator (not shown) is thereby contacted, the expanded part is engaged between the stator and the rotor 1, causing interruption of the rotation of the rotor 1, if the columnar portion 6 fractures.

The present invention has been made in view of the technical problems described above, and its object is to provide a motor for an injection molding machine having excellent durability, and a rotor of a buried magnet motor.

### Disclosure of the Invention

A motor for an injection molding machine of the present invention which has been made for the purpose described above is a motor for driving a cylinder for injection of a resin in the injection molding machine, comprising a ring-shaped stator fixed in a housing and having a coil which generates a magnetic field when a voltage is applied from outside, and a rotor rotatably supported by the housing in the inside of the stator and having a plurality of permanent magnets placed opposite to the stator in the circumferential direction. The rotor comprises a shaft rotatably supported by the housing, and a plurality of plates stacked along the axis line direction of the shaft, and having holding holes into which the permanent magnets are inserted, respectively, and columnar portions situated between the holding holes adjacent in the circumferential direction. In this configuration, the characteristic is that the columnar portion serves, at a portion between the inner circumferential end and the intermediate portion, as a line contact portion coming into line contact with the side surface of the permanent magnet.

The magnet comes into line contact with the line contact portion, whereby the load of the permanent magnet is prevented from being localized due to the inertia during acceleration/deceleration of the motor, and abrasion of the columnar portion can be thus inhibited. At this time, the line contact portion may have a configuration in which the width gradually increases as going from the inner circumferential end to the intermediate portion in the columnar portion.

Furthermore, a gap is preferably formed between a portion between the intermediate portion and the outer circumferential end in the columnar portion and the permanent magnet in the holding hole. The cross-section area of the columnar portion at the portion between the intermediate portion and the outer circumferential end is made equal to or smaller than the cross-section area of the line contact portion. In this way, the columnar portion is made thin at the portion between the intermediate portion and the outer circumferential end, whereby there can be obtained a leakage flux controlling portion controlling a leakage flux from between adjacent permanent magnets.

Furthermore, a filler for preventing the movement of the permanent magnet in the circumferential direction is preferably filled between the line contact portion and the side surface of the permanent magnet. Consequently, excessive backlashes of the permanent magnet can be reduced. For the filler, a varnish, an adhesive or a resin is preferably used. The filler can be filled between the line contact portion and the side surface of the permanent magnet by setting a plurality of plates on the shaft and thereafter dipping the plates in the filler.

The width of the columnar portion at the inner circumferential end is made almost equal to that at the outer circumferential end, whereby the line contact portion can be prevented from becoming excessively thick, and deterioration of the electromagnetic characteristic of the motor from the aforementioned cause can be thus prevented.

On the other hand, when importance is placed on the durability, the width of the columnar portion at the inner circumferential end may be set larger than that at the outer circumferential end.

The rotor of a buried magnet motor of the present invention comprises a shaft rotatably supported by a housing of the buried magnet motor, and a plurality of plates stacked along the axis line direction of the shaft, and having holding holes into which the permanent magnets are inserted, respectively, and columnar portions situated between the holding holes adjacent in the circumferential direction. In this configuration, the characteristic is that the columnar portion serves, at a portion between the inner circumferential end and the intermediate portion, as a line contact portion coming into contact with the side surface of the permanent magnet.

This buried magnet motor is not limited to the application for injection molding machines, but can be used for other applications as appropriate.

According to the present invention, the columnar portion situated between holding holes adjacent in the circumferential direction in the plate serves, at a portion between the inner circumferential end and the intermediate portion, as a line contact portion coming into contact with the side surface of the permanent magnet, whereby the permanent magnet is prevented from strongly butting against a specific part of the columnar portion due to acceleration/deceleration during actuation of the motor, and the durability of the rotor can be thus enhanced sharply.

### Brief Description of the Drawings

Figure 1 is a sectional view showing the outlined configuration of a servo motor in this embodiment;
Figure 2 is an enlarged view showing the configuration of a columnar portion;
Figure 3 is a view showing an example in which a filler is placed between the columnar portion and a permanent magnet in the configuration of Figure 2;
Figure 4 is a view showing another example of the columnar portion;
Figure 5 is a view showing an example in which a filler is placed between the columnar portion and the permanent magnet in the configuration of Figure 4; and
Figure 6 is a view showing the configuration of the conventional columnar portion.

### Description of Symbols

10 ... servo motor (motor for an injection molding machine, buried magnet motor)
11 ... housing
12 ... stator
20 ... rotor
21 ... shaft
22 ... plate
23 ... permanent magnet
24 ... holding hole
25 ... columnar portion
25a ... inner circumferential end
25b ... outer circumferential end
30 ... holding portion (line contact portion)
40 ... leakage flux controlling portion
50 ... filler
60 ... outer circumferential reinforcing material

### Best Mode for Carrying Out the Invention

This invention will be described in detail below based on the embodiment shown in the appended drawings.

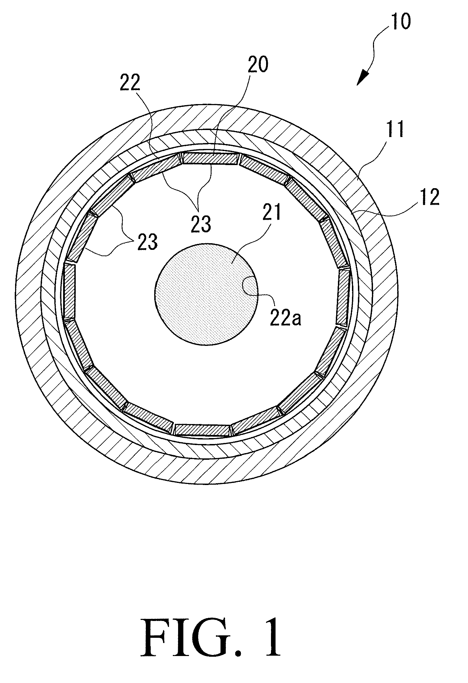

Figure 1 is a view for explaining the configuration of a servo motor (motor for an injection molding machine, buried magnet motor) 10 in this embodiment. As shown in Figure 1, the servo motor 10 is used as a drive source for a cylinder for injection of a resin in the injection molding machine, and has a diameter of 200 mm or greater and a total length of 200 mm or greater, which is a large size.

The servo motor 10 comprises a rotor 20 rotatably supported in a housing 11 and a stator 12 provided at a predefined clearance on the outer circumference of the rotor 20.

The servo motor 10 generates a magnetic field by passing a current through a coil provided in the stator 12 from a power supply (not shown), and rotates the rotor 20 by the interaction between this magnetic field and a magnetic field generated by permanent magnets 23 provided in the rotor. The cylinder for injection of a resin, which is coupled to a shaft 21 of the rotor 20 via a ball screw or the like, is driven as the rotor 20 is rotated.

The rotor 20 has a configuration in which a large number of plates 22 are stacked along the axis line direction of the shaft 21 on the outer circumference of the shaft having a predefined length, and on these plates 22 are placed a plurality of permanent magnets 23 in the circumferential direction of the plate 22.

The shaft 21 of the rotor 20 is rotatably supported by the housing 11 via a bearing, with at least one end thereof projecting to the outside of the housing 11.

Each plate 22 is composed of a so called electrode steel plate, and has a thickness of, for example, 0.35 mm or 0.5 mm. A hole 22a having a predefined diameter is formed at the center of the plate 22, and the shaft 21 is inserted into the hole 22a to thereby attach a predetermined number of plates 22 to the shaft 21.

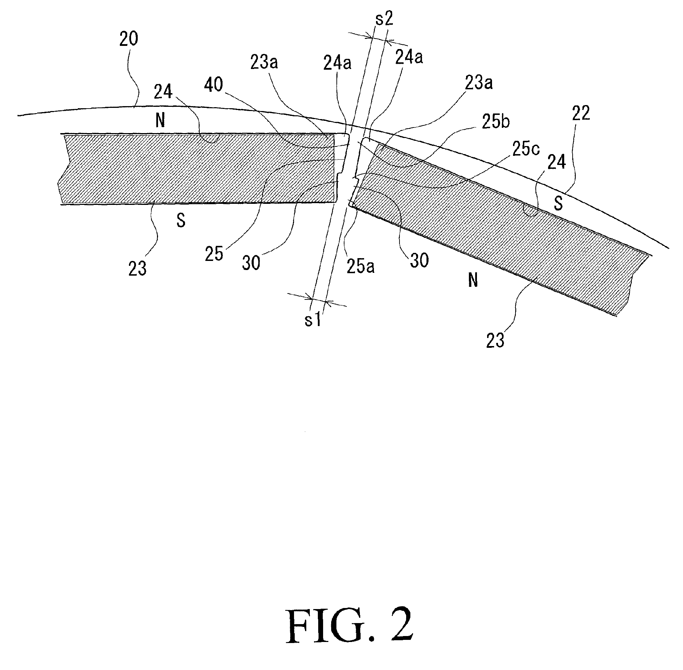

As shown in Figure 2, a plurality of holding holes 24 holding the permanent magnets 23 are formed at intervals in the circumferential direction, on the outer circumference of the plate 22. The holding hole 24 has a dimension and shape matching the cross-sectional shape of the permanent magnet 23, and for improving the workability during insertion of the permanent magnet 23, an escape portion 24a is formed in the vicinity of a corner 23a of the permanent magnet 23.

In the plate 22 having the configuration described above, a columnar portion 25 is formed between adjacent holding holes 24, 24. This columnar portion 25 is formed such that the width s1 at the inner circumferential end 25a is almost equal to the width s2 at the outer circumferential end 25b, and as going from the inner circumferential end 25a toward the intermediate portion 25c, the columnar portion 25 has its width gradually increased so as to come into line (plane) contact with the permanent magnet 23 and extends almost in parallel to the side surface of the permanent magnet 23.

According to the columnar portion 25 having the configuration described above, the permanent magnet 23 is locked and thus prevented from moving even during acceleration/deceleration of the servo motor 10 by a holding portion (line contact portion) 30 between the inner circumferential end 25a and the intermediate portion 25c. Moreover, since the holding portion 30 is formed almost in parallel to the side surface of the permanent magnet 23 and comes into line contact with the permanent magnet 23, the permanent magnet 23 does not butt against a specific part even during a long term use, and abrasion and fracture of the columnar portion 25 can be thereby prevented. Consequently, the durability of the columnar portion 25 can be enhanced sharply.

Furthermore, in the configuration described above, the width of the columnar portion 25 is made almost constant at a portion between the intermediate portion 25c and the outer circumferential end 25b. The reason for this is that in the plate 22 composed of an electromagnetic steel plate, a leakage flux from the gap between adjacent permanent magnets 23, 23 is present, but a portion of the columnar portion 25 having the smallest cross-section area limits the amount of leakage flux, and therefore the width (cross-section area) of the columnar portion 25 at a portion between the intermediate portion 25c and the outer circumferential end 25b is made constant and smaller than the cross-section area of the holding portion 30 to thereby let this portion of the columnar portion 25 serve as a leakage flux controlling portion 40 for limiting the leakage flux.

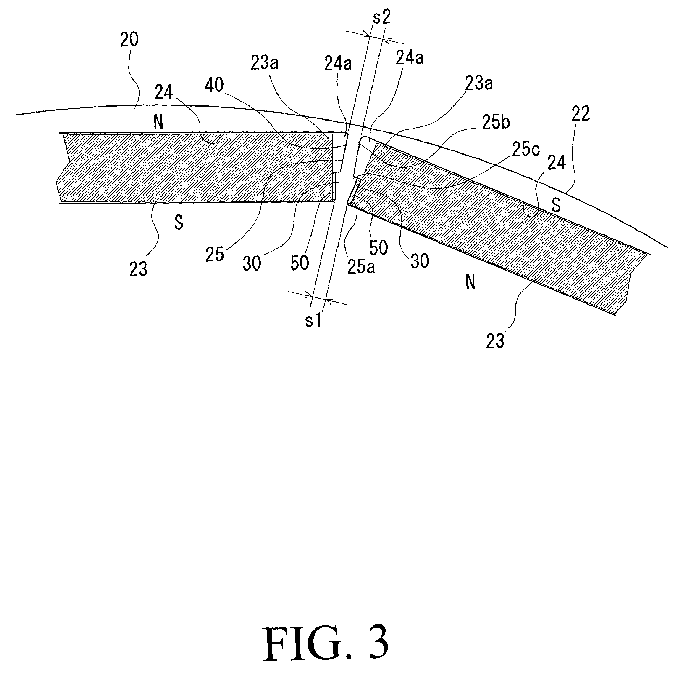

Further, as shown in Figure 3, the gap between the holding portion 30 of the columnar portion 25 having a configuration similar to that shown in Figure 1 and the permanent magnet 23 may be filled with a filler 50 such as an electric insulating varnish, an adhesive or a resin to close the gap between the holding portion 30 and the permanent magnet 23. Consequently, the permanent magnet 23 does not move even during acceleration/deceleration of the servo motor 10 in the holding hole 24, and the above-mentioned effect becomes more prominent.

The filler 50 can be filled between the holding portion 30 and the permanent magnet 23 by setting a predefined number of plates 22 on the shaft 21 and dipping the plates in the filler 50. The reason for this is that since the holding portion 30 is almost parallel to the side surface of the permanent magnet 23, and the clearance at this portion is smaller than the clearance at other portions, the filler 50 is retained by its surface tension at this portion and falls down at other portions where the gap is larger. Therefore, it is necessary to set the viscosity of the filler 50 as appropriate.

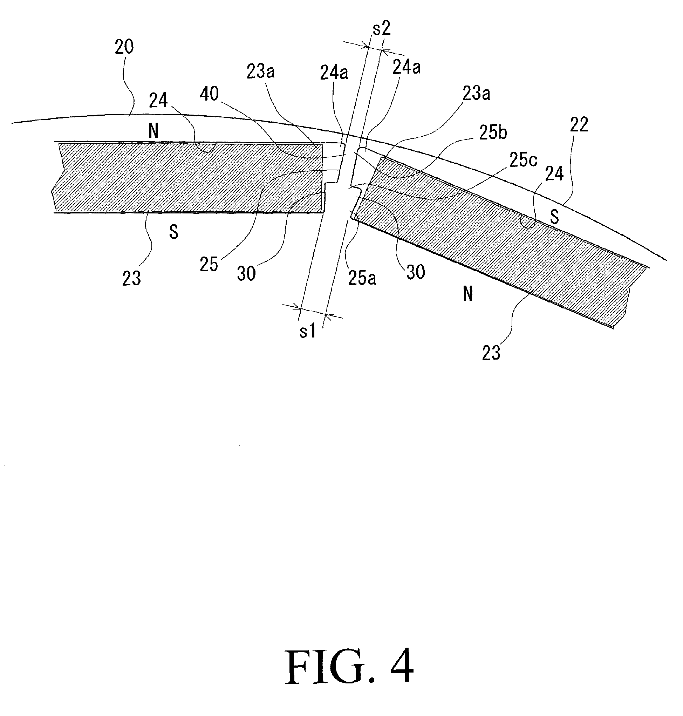

In the configuration shown in Figures 2 and 3, the width s1 of the columnar portion 25 at the inner circumferential end 25a is almost equal to the width s2 at the outer circumferential end 25b, but the present invention is not limited to this configuration. As shown in Figure 4, the width s1 of the columnar portion 25 at the inner circumferential end 25a may be made larger than the width s2 at the outer circumferential end 25b, and the holding portion 30 almost parallel to the side surface of the permanent magnet 23 may be formed at a portion between the inner circumferential end 25a and the intermediate portion 25c. In this case, the columnar portion 25 preferably has a reduced cross-section area at a portion between the intermediate portion 25c and the outer circumferential end 25b to serve as the leakage flux controlling portion 40.

In this configuration, the width s1 of the columnar portion 25 at the inner circumferential end 25a becomes larger than that of the configuration shown in Figures 2 and 3, in the holding portion 30, resulting in still further enhanced durability. In this case, however, the distance between adjacent permanent magnets 23, 23 becomes larger, and therefore the torque generated in the servo motor 10 becomes lower as compared to the configuration of Figures 2 and 3. Therefore, the width s1 of the columnar portion 25 at the inner circumferential end 25a may be set according to a balance between the durability and the performance, which is required for the servo motor 10.

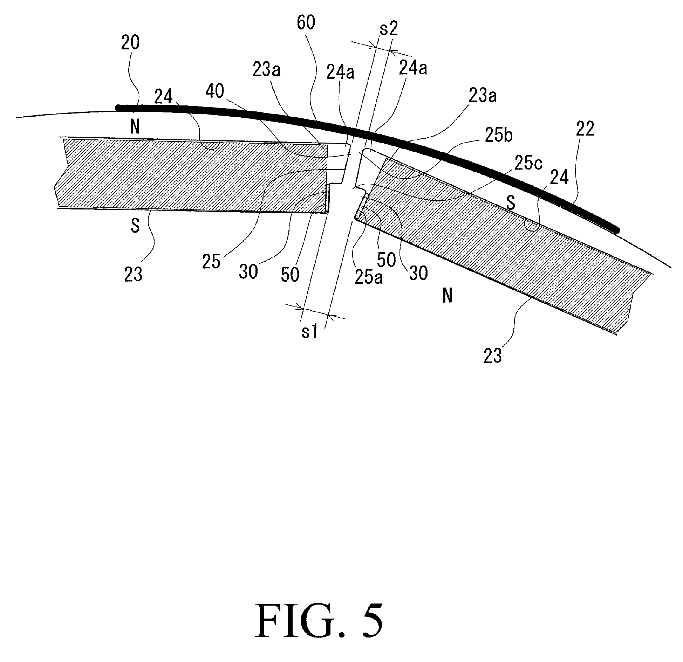

In this configuration, the gap between the holding portion 30 of the columnar portion 25 and the permanent magnet 23 may be filled with the filler 50 such as an electric insulating varnish, an adhesive or a resin to close the gap between the holding portion 30 and the permanent magnet 23 as shown in Figure 5.

Further, in the configuration shown in Figures 2 to 5, after the plates 22 are stacked and attached on the shaft 21, a cloth or a tape may be wound around its outer circumference and further impregnated with a varnish or the like to serve as an outer circumferential reinforcing material 60 for the plurality of stacked plates 22.

Consequently, projection of a part of the plate 22 toward the outer circumference can be prevented even if the columnar portion 25 fractures.

In the embodiment described above, the configuration of the servo motor 10 has been described, but the configurations, applications and the like of other portions may be different from those described above without departing from the spirit of the present invention.

In addition, the configurations mentioned in the embodiment described above can be adopted and rejected or changed to other configurations as appropriate.

## Claims

1. A motor for an injection molding machine for driving a cylinder for injection of a resin in the injection molding machine, comprising:
a ring-shaped stator fixed in a housing and having a coil which generates a magnetic field when a voltage is applied from outside; and
a rotor rotatably supported by the housing in the inside of the stator and having a plurality of permanent magnets placed opposite to the stator in the circumference direction,
the rotor comprising:
a shaft rotatably supported by the housing; and
a plurality of plates stacked along the axis line direction of the shaft, and having holding holes into which the permanent magnets are inserted, respectively, and columnar portions situated between the holding holes adjacent in the circumferential direction,
**characterized in that** the columnar portion serves, at a portion between the inner circumferential end and the intermediate portion, as a line contact portion coming into line contact with the side surface of the permanent magnet.

2. The motor for an injection molding machine according to claim 1, **characterized in that** the line contact portion has a configuration in which the width gradually increases as going from the inner circumferential end toward the intermediate portion in the columnar portion.

3. The motor for an injection molding machine according to claim 1, **characterized in that** the cross-section area of the columnar portion at a portion between the intermediate portion and the outer circumferential end is equal to or smaller than the cross-section area of the line contact portion.

4. The motor for an injection molding machine according to claim 1, **characterized in that** a gap is formed between the portion between the intermediate portion and the outer circumferential end in the columnar portion and the permanent magnet in the holding hole.

5. The motor for an injection molding machine according to claim 4, **characterized in that** the columnar portion serves, at the portion between the intermediate portion and the outer circumferential end, as a leakage flux controlling portion controlling a leakage flux from the adjacent permanent magnets.

6. The motor for an injection molding machine according to claim 1, **characterized in that** a filler for preventing the movement of the permanent magnet in the circumferential direction is filled between the line contact portion and the side surface of the permanent magnet.

7. The motor for an injection molding machine according to claim 6, **characterized in that** the filler is a varnish, an adhesive or a resin.

8. The motor for an injection molding machine according to claim 6, **characterized in that** the filler is filled between the line contact portion and the side surface of the permanent magnet by setting the plurality of plates on the shaft and then dipping the plates in the filler.

9. The motor for an injection molding machine according to claim 1, **characterized in that** the width of the columnar portion at the inner circumferential end is almost equal to that at the outer circumferential end.

10. The motor for an injection molding machine according to claim 1, **characterized in that** the width of the columnar portion at the inner circumferential end is set larger than that at the outer circumferential end.

11. A rotor of a buried magnet motor, comprising:
a shaft rotatably supported by a housing of the buried magnet motor; and
a plurality of plates stacked along the axis line direction of the shaft, and having holding holes into which the permanent magnets are inserted, respectively, and columnar portions situated between the holding holes adjacent in the circumferential direction,
**characterized in that** the columnar portion serves, at a portion between the inner circumferential end and the intermediate portion, as a line contact portion coming into line contact with the side surface of the permanent magnet.

12. The rotor of a buried magnet motor according to claim 11, **characterized in that** the line contact portion has a configuration in which the width gradually increases as going from the inner circumferential end toward the intermediate portion in the columnar portion.

13. The rotor of a buried magnet motor according to claim 11, **characterized in that** the cross-section area of the columnar portion at a portion between the intermediate portion and the outer circumferential end is equal to or smaller than the cross-section area of the line contact portion.

14. The rotor of a buried magnet motor according to claim 11, **characterized in that** a gap is formed between the portion between the intermediate portion and the outer circumferential end in the columnar portion and the permanent magnet in the holding hole.
